# EUROPÄISCHE PATENTSCHRIFT

(11) **EP 3 257 709 B1**
(45) Veröffentlichungstag und Bekanntmachung des Hinweises auf die Patenterteilung: **06.03.2019**
(21) Anmeldenummer: 17171682.2
(22) Anmeldetag: 18.05.2017
(51) Int. Cl.: B60L 3/12, B60L 11/18, B60L 3/04, B60R 21/013, B60R 21/0134, B60R 16/03

(54) **GERÄT FÜR EIN KRAFTFAHRZEUG**
DEVICE FOR A MOTOR VEHICLE
APPAREIL POUR VÉHICULE AUTOMOBILE

(30) Priorität: 15.06.2016 DE 102016007256
(43) Veröffentlichungstag der Anmeldung: 20.12.2017
(73) Patentinhaber: AUDI AG, 85045 Ingolstadt (DE)
(72) Erfinder: Schüssler, Martin, 85092 Kösching (DE)

(56) Entgegenhaltungen:
- EP-A1- 1 645 475
- DE-A1-102009 050 996
- DE-A1-102011 014 343
- DE-A1-102014 017 990

## Beschreibung

Die Erfindung betrifft ein Gerät für ein Kraftfahrzeug und ein Verfahren zum Betreiben eines Geräts.

Ein Kraftfahrzeug, zu dessen Antrieb mindestens eine Elektromaschine verwendet wird, umfasst ein elektrisches System mit mindestens einer Steuereinheit und mindestens einem Energiespeicher, mit denen die mindestens eine Elektromaschine zu steuern sowie mit elektrischer Energie zu versorgen ist. Dabei weist dieses elektrische System eine elektrische Spannung auf, die höher als eine elektrische Spannung einer üblichen Batterie eines Kraftfahrzeugs ist. Weiterhin ist dem elektrischen System des Kraftfahrzeugs ein Crash-Sensor bzw. Aufprallsensor zugeordnet, mit dem ein Aufprall, der auf das Kraftfahrzeug wirkt, zu erkennen ist. Falls sich ein derartiger Aufprall ergibt, wird von dem Crash-Sensor ein Signal erzeugt und über eine Leitung dem elektrischen System bereitgestellt. Bei Empfang eines derartigen Signals ist es möglich, das elektrische System zumindest teilweise abzuschalten. Allerdings besteht hier die Gefahr, dass sich mechanische Auswirkungen des Aufpralls bereits auf das elektrische System auswirken, bevor das Signal, das den Aufprall dokumentiert, das elektrische System erreicht hat, so dass nicht genügend Zeit verbleibt, um für das elektrische System eventuell vorgesehene Sicherheitsmaßnahmen, üblicherweise durch Abschalten des Systems, zu ergreifen.

Aus der Druckschrift CN 202806406 U ist ein Unfall-Sicherheitssystem für ein elektrisch anzutreibendes Kraftfahrzeug mit einem Hochspannungs-Bordnetz bekannt, wobei diesem Hochspannungs-Bordnetz ein Trägheitsschalter zugeordnet ist, der bei einem Unfall eine Batterie von einem Verbraucher als Komponenten des Hochspannungs-Bordnetzes trennt.

Ein mechanischer Crash-Stromschalter, der eine Batterie eines Kraftfahrzeugs bei einem Unfall automatisch von einem Verbraucher trennt, ist aus der Druckschrift DE 79 05 331 U1 bekannt.
Ein Auslösesystem für einen Airbag eines Kraftfahrzeugs ist in der Druckschrift DE 43 06 488 A1 beschrieben, wobei das Auslösesystem einen elektromechanischen Crash-Schalter aufweist, der bei einem Unfall im Kraftfahrzeug automatisch Sicherheitselemente auslöst.
Aus der Druckschrift DE 102 60 271 A1 ist eine Vorrichtung zum Auslösen einer elektrischen Sicherung in einem Versorgungsstromkreis eines in einem Kraftfahrzeug angeordneten Verbrauchers, bei dem ein auf Masse liegender elektrischer Leiter und ein Plus-Leiter des Versorgungsstromkreises im Kraftfahrzeug so angeordnet sind, dass durch eine bei einem Unfall einwirkende Kraft die beiden Leiter niederohmig kurgeschlossen werden, bekannt.

Druckschrift DE 10 2014 017 990 A1 offenbart den Oberbegriff des Patentanspruchs 1, und ein Verfahren zum Betreiben eines Geräts eines Kraftfahrzeugs wobei das Gerät ein Gehäuse aufweist, in dem elektrische Bauteile angeordnet sind, die über mindestens eine elektrische Versorgungsleitung, die innerhalb des Gehäuses angeordnet ist, mit elektrischer Energie versorgt werden, wobei das Gehäuse mindestens einen Aufprallschalter aufweist, wobei für den Fall, dass auf den mindestens einen Aufprallschalter eine mechanisch Kraft wirkt, die einen Schwellwert überschreitet, das Gehäuse an einer Position des mindestens einen Aufprallschalters verformt wird wo ist eine Hochvoltkomponente für ein Kraftfahrzeug, insbesondere ein Hybrid- oder Elektrofahrzeug, mit einer Sensoreinrichtung, mittels welcher eine mechanische Beschädigung der Hochvoltkomponente erfassbar ist, wobei die Sensoreinrichtung wenigstens Kammer und zumindest einen Drucksensor aufweist, mittels welchem eine durch eine mechanische Beschädigung der Hochvoltkomponente bewirkte Änderung eines in der Kammer herrschenden Gasdrucks erfassbar ist, bekannt.
In der Druckschrift DE 10 2010 051 669 A1 wird ein elektrischen Bauteil mit einer Einrichtung zum Trennen einer elektrischen Leistungsverbindung offenbart, das eine Reaktivmultischichtstruktur aufweist, um die Trennung der elektrischen Leitungsverbindung zu bewirken. Das elektrische Bauteil kann eine galvanische Zelle sein, und die Einrichtung zum Trennen kann außerhalb oder innerhalb der Zelle angeordnet sein.

Aus der Druckschrift DE 10 2009 050 996 A1 ist eine Energiespeichereinrichtung, insbesondere für Fahrzeuge bekannt, mit mindestens zwei Energiequellen, die über eine elektrische Verbindung verbunden sind, und mindestens einem Sicherheitselement, wobei das Sicherheitselement verformbar und / oder expandierbar ist, um die elektrische Verbindung zwischen den Energiequellen aufzutrennen. Ferner wird ein Verfahren zum Auftrennen von elektrischen Verbindungen eiener Energiespeichereinrichtung mit mindestens zwei Energiequellen offenbart.

Vor diesem Hintergrund werden ein Gerät und ein Verfahren mit den Merkmalen der unabhängigen Patentansprüche vorgestellt. Ausgestaltungen des Geräts und des Verfahrens gehen aus den abhängigen Patentansprüchen und der Beschreibung hervor.

Das erfindungsgemäße elektrische Gerät, das für ein Kraftfahrzeug vorgesehen ist, weist ein Gehäuse auf, in dem elektrische Bauteile angeordnet sind, die über mindestens eine elektrische Versorgungsleitung, die innerhalb des Gehäuses angeordnet ist, mit elektrischer Energie zu versorgen sind. Das Gehäuse weist mindestens einen Aufprallschalter auf. Falls auf den mindestens einen Aufprallschalter eine mechanisch Kraft wirkt, die einen Schwellwert überschreitet, ist das Gehäuse an einer Position des mindestens einen Aufprallschalters zu verformen, wobei die mindestens eine elektrische Versorgungsleitung innerhalb des Gehäuses aufgrund einer Verformung des Gehäuses an der Position des mindestens einen Aufprallschalters und einer daraus resultierenden Kraft zu durchtrennen ist.

In Ausgestaltung ist der mindestens eine Aufprallschalter des Gehäuses als Sollbruchstelle ausgebildet.

Die mindestens eine Versorgungsleitung weist mindestens eine Sollbruchstelle auf, die aufgrund der Verformung des Gehäuses an der Position des mindestens einen Aufprallschalters und der daraus resultierenden Kraft zu durchtrennen ist, wobei sich die Verformung des Gehäuses auf die Sollbruchstelle der Versorgungsleitung auswirkt.

Weiterhin ist es möglich, dass in dem Gehäuse des Geräts mindestens ein Bauteil angeordnet ist, das die Position des Gehäuses, an der der mindestens eine Aufprallschalter angeordnet ist, und die mindestens eine elektrische Versorgungsleitung verbindet. Dabei ist das mindestens eine Bauteil dazu ausgebildet, die aus der Verformung des Gehäuses an der Position des mindestens einen Aufprallschalters resultierende Kraft zu der mindestens einen Versorgungsleitung zu übertragen.

In Ausgestaltung ist die mindestens eine Sollbruchstelle der mindestens einen Versorgungsleitung über das mindestens eine Bauteil mit dem mindestens einen Aufprallschalter verbunden, wobei das mindestens eine Bauteil dazu ausgebildet ist, die aus der Verformung des Gehäuses an der Position des mindestens einen Aufprallschalters resultierende Kraft zu der mindestens einen Sollbruchstelle der mindestens einen Versorgungsleitung zu übertragen.

In weiterer Ausgestaltung ist das Gehäuse des Geräts aufgrund der wirkenden Kraft zu verformen, wobei das Gerät dennoch verschlossen bleibt.

In dem Gehäuse des Geräts sind ferner elektrische und/oder mechanische Bauteile einer Elektromaschine zum Antreiben des Kraftfahrzeugs angeordnet.

Elektrische bzw. elektronische Bauteile des Geräts bilden eine Leistungselektronik, bspw. für die Elektromaschine zum Antreiben des Kraftfahrzeugs.

Alternativ oder ergänzend ist es möglich, dass die Versorgungsleitung an einer Innenwand des Gehäuses angeordnet ist und somit das Gehäuse berührt. Dabei ist es möglich, dass der mindestens eine Aufprallschalter mit der Versorgungsleitung verbunden ist. Falls das Gehäuse aufgrund eines Aufpralls an der Position des mindestens einen Aufprallschalters verformt wird, wirkt sich eine derartige Verformung unmittelbar auf die Versorgungsleitung aus, wobei die Versorgungsleitung durch den Aufprallschalter und/oder das sich verformende Gehäuse direkt unterbrochen bzw. durchtrennt wird.

Bei dem erfindungsgemäßen Verfahren zum Betreiben eines Geräts eines Kraftfahrzeugs ist vorgesehen, dass das Gerät ein Gehäuse aufweist, in dem elektrische Bauteile angeordnet sind, die über mindestens eine elektrische Versorgungsleitung, die innerhalb des Gehäuses angeordnet ist, mit elektrischer Energie versorgt werden. Das Gehäuse des Geräts umfasst mindestens einen Aufprallschalter. Falls auf den mindestens einen Aufprallschalter eine mechanisch Kraft wirkt, die einen Schwellwert überschreitet, wird das Gehäuse an einer Position des mindestens einen Aufprallschalters verformt, wobei die mindestens eine elektrische Versorgungsleitung innerhalb des Gehäuses aufgrund einer Verformung des Gehäuses an der Position des mindestens einen Aufprallschalters und einer daraus resultierenden Kraft durchtrennt wird.

Dabei ist es möglich, dass die mindestens eine Versorgungsleitung, bspw. deren mindestens eine Sollbruchstelle durch den mindestens einen Aufprallschalter und/oder das sich verformende Gehäuse direkt oder indirekt, üblicherweise über das mindestens eine in dem Gehäuse angeordnete Bauteil, beaufschlagt und durchtrennt wird.

Somit umfasst das Gerät bzw. das Gehäuse des Geräts mindestens einen mechanischen Aufprallschalter bzw. Crash-Schalter, mit dem die Versorgungsleitung innerhalb des Gehäuses des Geräts mechanisch zu beaufschlagen ist. Somit ist u. a. im Fall eines Aufpralls und/oder Unfalls des Kraftfahrzeugs eine Zeit zum Durchtrennen und somit zum Unterbrechen der Versorgungsleitung zu reduzieren, so dass das Gerät auch in unterschiedlichen Positionen des Kraftfahrzeugs unabhängig von einer Bereitstellung von Signalen eines Crash-Sensors positionierbar ist. Dabei ist das Gerät üblicherweise als Komponente eines Hochspannungssystems des Kraftfahrzeugs ausgebildet, wobei in dem Gerät bspw. eine Leistungselektronik für eine Elektromaschine zum Antreiben des Kraftfahrzeugs angeordnet ist. In das Gehäuse dieses Geräts ist nun der mechanische Aufprallschalter integriert, so dass auf einen ansonsten üblichen Beschleunigungssensor zum Erkennen eines Aufpralls verzichtet werden kann.

Mit dem Aufprallschalter, durch den die Versorgungsleitung mechanisch zu beaufschlagen ist, sind die Bauteile des Geräts und/oder das komplette Gerät von einer elektrischen Energieversorgung mechanisch zu trennen. Üblicherweise ist die Versorgungsleitung innerhalb des Gehäuses des Geräts über eine elektrische Schnittstelle mit einem elektrischen Energiespeicher bzw. einer elektrischen Energiequelle außerhalb des Geräts verbunden. Hierbei ist von dem elektrischen Energiespeicher bzw. der elektrischen Energiequelle eine hohe Spannung von bspw. mindestens 40 V, die höher als eine sonst übliche Spannung einer Batterie des Kraftfahrzeugs ist, mit elektrischer Energie zu versorgen.

Im Fall des Aufpralls bzw. Unfalls, wenn auf den mindestens einen mechanischen Aufprallschalter die mechanische Kraft wirkt, die größer als der vorgegebene Sollwert ist, werden die Bauteile innerhalb des Gehäuses des Geräts bei Unterbrechung der Versorgungsleitung innerhalb des Gehäuses automatisch von dem externen elektrischen Energiespeicher getrennt, wodurch eine Stromzufuhr zu den Bauteilen unterbrochen wird. Da die elektrische Versorgungsleitung innerhalb des sich an dem mindestens einen Aufprallschalter lediglich verformenden, jedoch verschlossen bleibenden Gehäuse durchtrennt wird, beschränkt sich ein eventuell auftretender Lichtbogen und/oder ein Kurzschluss auf einen Innenraum innerhalb des Gehäuses, wodurch eine Umgebung außerhalb des Gehäuses nicht negativ beeinträchtigt wird.

Da das Gerät mit dem mindestens einen Aufprallschalter in dessen Gehäuse mindestens eine eigene elektromechanische Sicherung aufweist, ist dessen Versorgungsleitung unabhängig von etwaigen Signalen, die außerhalb des Geräts im Fall eines Aufpralls erzeugt werden, zu durchtrennen, weshalb das Gerät nunmehr auch an einer beliebigen Position innerhalb des Kraftfahrzeugs angeordnet werden kann.

In einer möglichen Ausgestaltung des Geräts und/oder des Verfahrens ist vorgesehen, dass sich eine bei einem Aufprall bzw. Unfall auftretende Kraft in einem Bruchteil einer Sekunde auf das Gehäuse des Geräts auswirkt, wobei das Gehäuse an dem mindestens einen Crash-Schalter, der bspw. als Sollbruchstelle ausgebildet ist, wobei das Gehäuse in dem Bereich des mindestens einen Aufprallschalters dünn und/oder weich sein kann, verformt wird. Aufgrund der Verformung des Gehäuses an der Position des mindestens einen Aufprallschalters wird die bspw. als Stromschiene ausgebildete elektrische Versorgungsleitung ebenfalls beaufschlagt und dadurch durchtrennt. Dabei ist es möglich, dass die elektrische Versorgungsleitung und/oder die mindestens eine Sollbruchstelle der elektrischen Versorgungsleitung unmittelbar hinter dem mindestens einen Aufprallschalter, bspw. an einer Innenwand des Geräts, angeordnet ist.

Durch Durchtrennen der Versorgungsleitung an der mindestens einen Sollbruchstelle werden eine Strom- und/oder Spannungsversorgung von Bauteilen innerhalb des Gehäuses des Geräts gezielt unterbrochen. Ein bei Durchtrennen der Versorgungsleitung eventuell auftretender Lichtbogen ist dabei auf den Innenraum des Gehäuses beschränkt. Alternativ oder ergänzend ist es möglich, dass die Versorgungsleitung bei einer Verformung des Gehäuses an der Position des mindestens einen Aufprallschalters durch mindestens ein Bauteil innerhalb des Gehäuses mechanisch beaufschlagt wird, wobei die Versorgungsleitung und/oder die mindestens eine Sollbruchstelle der Versorgungsleitung über das mindestens eine Bauteil mit dem mindestens einen Aufprallschalter im Gehäuse des Geräts verbunden ist.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung ein Kraftfahrzeug, das mindestens eine erste Ausführungsform des erfindungsgemäßen Geräts aufweist.
Figur 2 zeigt in schematischer Darstellung die mindestens eine erste Variante der Ausführungsform des erfindungsgemäßen Geräts aus Figur 1 in zwei Betriebssituationen.
Figur 3 zeigt in schematischer Darstellung eine zweite Variante der Ausführungsform des erfindungsgemäßen Geräts.

Die Figuren werden zusammenhängend und übergreifend beschrieben, gleichen Komponenten sind dieselben Bezugsziffern zugeordnet.

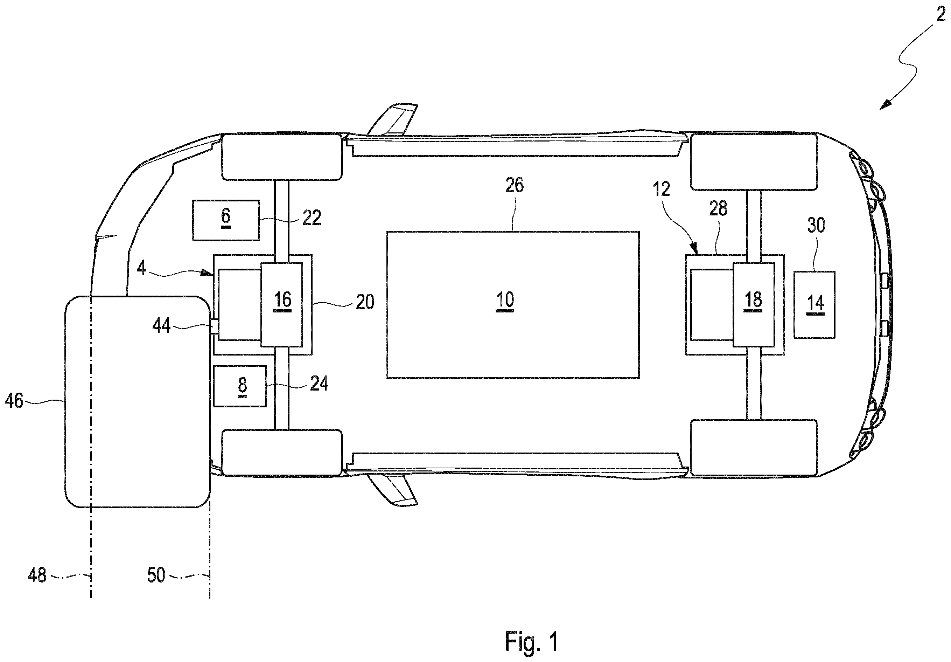

Figur 1 zeigt in schematischer Darstellung ein Kraftfahrzeug 2, das mehrere elektrische Geräte 4, 6, 8, 10, 12, 14 aufweist. Dabei ist ein erstes elektrisches Gerät 4 als Leistungselektronik für einen ersten Elektromotor 16 zum Antreiben einer Vorderachse des Kraftfahrzeugs 2, ein zweites elektrisches Gerät 6 als Hochspannungsheizgerät, ein drittes elektrisches Gerät 8 als Klimakompressor, ein viertes elektrisches Gerät 10 als elektrische Energiequelle, hier als Hochspannungsbatterie, ein fünftes elektrisches Gerät 12 als Leistungselektronik für eine zweite Elektromaschine 18 zum Antreiben einer hinteren Achse des Kraftfahrzeugs 2 und ein sechstes elektrisches Gerät 14 als zweiter Energiespeicher, hier eine Niederspannungsbatterie von 12 V, ausgebildet.

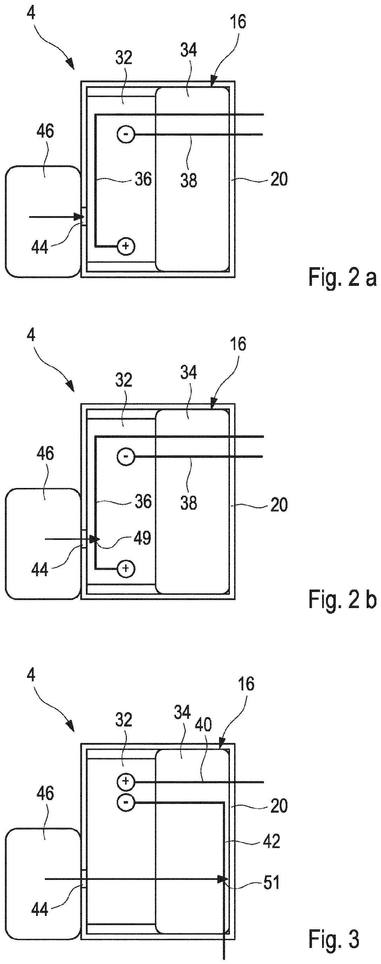

Details zu einem dieser elektrischen Geräte 4, 6, 8, 10, 12, 14 sind in Figur 2 und 3 explizit anhand des ersten als Leistungselektronik ausgebildeten Geräts 4 gezeigt.

Hierbei ist vorgesehen, dass mindestens eines der genannten Geräte 4, 6, 8, 10, 12, 14 ein Gehäuse 20, 22, 24, 26, 28, 30 aufweist, in dem elektrische Bauteile 32, 34 des jeweiligen Geräts 4, 6, 8, 10, 12, 14 angeordnet sind, wobei diese Bauteile 32, 34 über mindestens eine elektrische Versorgungsleitung 36, 38, 40, 42 mit elektrischer Energie zu versorgen sind, wobei diese mindestens eine Versorgungsleitung 36, 38, 40, 42 innerhalb des Gehäuses 20, 22, 24, 26, 28, 30 angeordnet ist und üblicherweise über eine Schnittstelle in dem Gehäuse 20, 22, 24, 26, 28, 30 mit einer externen Energiequelle zur Versorgung mit elektrischer Energie verbunden ist.

Außerdem weist das Gehäuse 20, 22, 24, 26, 28, 30 mindestens einen mechanischen Aufprallschalter 44 auf. Falls auf diesen mindestens einen Aufprallschalter 44 aufgrund eines Aufpralls und/oder Unfalls eine mechanische Kraft wirkt, die einen Schwellwert überschreitet, ist das Gehäuse 20, 22, 24, 26, 28, 30 an einer Position des mindestens einen Aufprallschalters 44 mechanisch zu verformen, wobei die mindestens eine elektrische Versorgungsleitung 36, 38, 40, 42 innerhalb des Gehäuses 20, 22, 24, 26, 28, 30 aufgrund einer Verformung des Gehäuses 20, 22, 24, 26, 28, 30 an der Position des mindestens einen Aufprallschalters 44 und einer daraus resultierenden Kraft zu durchtrennen ist bzw. durchtrennt wird und demnach zu unterbrechen ist bzw. unterbrochen wird.

Hierzu ist eine mechanische Auswirkung des Aufpralls in den Figuren 1, 2 und 3 durch eine sogenannte Aufprallbarriere 46 bzw. Crash-Barriere symbolisiert. Hierbei umfasst Figur 1 weiterhin eine erste Zeitlinie 48 sowie eine zweite Zeitlinie 50, die anzeigen, auf welche Position des Kraftfahrzeugs 2 sich der Aufprall in Abhängigkeit der Zeit auswirkt. Dabei ergibt sich die erste Zeitlinie 48 zu einem Zeitpunkt t=0, zu dem der Aufprall beginnt, wobei sich der Aufprall hier noch auf eine Außenwand des Kraftfahrzeugs 2 beschränkt. Die zweite Zeitlinie 50 ergibt sich nach einer Zeitspanne t=50 ms nach dem Aufprall und deutet an, dass sich der Aufprall bereits auf das Gehäuse 20 des ersten Geräts 4 auswirkt.

In dem Gehäuse 20 des ersten Geräts 4 ist weiterhin auch die erste Elektromaschine 16 angeordnet. Innerhalb des Gehäuses 28 des zweiten elektrischen Geräts 12 ist auch die zweite Elektromaschine 18 angeordnet. Je nach Definition sind die Elektromaschinen 16, 18 ebenfalls als elektrische Geräte ausgebildet und/oder zu bezeichnen.

Wie Figur 2a zeigt, wird bei einer ersten Ausführungsform des Verfahrens der Aufprallschalter 44 in dem Gehäuse 20 des Geräts 4 durch den Aufprall beaufschlagt, wobei das Gehäuse 20 an einer Position des Aufprallschalters 44 verformt wird. Daraus resultiert, wie Figur 2b zeigt, dass die hier mit dem Gehäuse 20 verbundene Versorgungsleitung 36 an einer Sollbruchstelle 49 durchtrennt wird.

Bei der zweiten Variante des Geräts 4 (Figur 3) wird der Aufprallschalter 44 in dem Gehäuse 20 aufgrund des Aufpralls ebenfalls mechanisch beaufschlagt und das Gehäuse 20 an der Position des Aufprallschalters 44 verformt. Hierbei ist vorgesehen, dass sich die Verformung über Bauteile 32, 34 innerhalb des Gehäuses 20 mittelbar auf die Versorgungsleitung 42 auswirkt, wobei die Versorgungsleitung 42 an der Position einer Sollbruchstelle 51 unterbrochen und somit durchtrennt wird.

## Patentansprüche

1. Gerät für ein Kraftfahrzeug (2), das ein Gehäuse (20, 22, 24, 26, 28, 30) aufweist, in dem elektrische Bauteile (32, 34) angeordnet sind, die über mindestens eine elektrische Versorgungsleitung (36, 38, 40, 42), die innerhalb des Gehäuses (20, 22, 24, 26, 28, 30) angeordnet ist, mit elektrischer Energie zu versorgen sind, wobei das Gehäuse (20, 22, 24, 26, 28, 30) mindestens einen Aufprallschalter (44) aufweist, wobei für den Fall, dass auf den mindestens einen Aufprallschalter (44) eine mechanische Kraft wirkt, die einen Schwellwert überschreitet, das Gehäuse (20, 22, 24, 26, 28, 30) an einer Position des mindestens einen Aufprallschalters (44) zu verformen ist, dadurch gekennnzeichnet, dass die mindestens eine elektrische Versorgungsleitung (36, 38, 40, 42) innerhalb des Gehäuses (20, 22, 24, 26, 28, 30) aufgrund einer Verformung des Gehäuses (20, 22, 24, 26, 28, 30) an der Position des mindestens einen Aufprallschalters (44) und einer daraus resultierenden Kraft durchtrennt wird.

2. Gerät nach Anspruch 1, bei dem der mindestens eine Aufprallschalter (44) des Gehäuses (20, 22, 24, 26, 28, 30) als Sollbruchstelle ausgebildet ist.

3. Gerät nach Anspruch 1 oder 2, bei dem die mindestens eine Versorgungsleitung (36, 38, 40, 42) mindestens eine Sollbruchstelle (49, 51) aufweist, die aufgrund der Verformung des Gehäuses (20, 22, 24, 26, 28, 30) an der Position des mindestens einen Aufprallschalters (44) und der daraus resultierenden Kraft zu durchtrennen ist.

4. Gerät nach einem der voranstehenden Ansprüche, bei dem die mindestens eine Versorgungsleitung (36, 38, 40, 42) an einer Innenwand des Gehäuses (20, 22, 24, 26, 28, 30) angeordnet und mit dem mindestens einen Aufprallschalter (44) verbunden ist.

5. Gerät nach einem der voranstehenden Ansprüche, in dessen Gehäuse (20, 22, 24, 26, 28, 30) mindestens ein Bauteil (32, 34) angeordnet ist, das die Position des Gehäuses (20, 22, 24, 26, 28, 30), an der der mindestens eine Aufprallschalter (44) angeordnet ist, und die mindestens eine elektrische Versorgungsleitung (36, 38, 40, 42) verbindet, wobei das mindestens eine Bauteil (32, 34) dazu ausgebildet ist, die aus der Verformung des Gehäuses (20, 22, 24, 26, 28, 30) an der Position des mindestens einen Aufprallschalters (44) resultierende Kraft zu der mindestens einen Versorgungsleitung (36, 38, 40, 42) zu übertragen.

6. Gerät nach einem der voranstehenden Ansprüche, dessen Gehäuse (20, 22, 24, 26, 28, 30) aufgrund der wirkenden Kraft zu verformen ist und verschlossen bleibt.

7. Gerät nach einem der voranstehenden Ansprüche, in dessen Gehäuse (20, 22, 24, 26, 28, 30) elektrische und/oder mechanische Bauteile (34) einer Elektromaschine (16, 18) zum Antreiben des Kraftfahrzeugs (2) angeordnet sind.

8. Gerät nach einem der voranstehenden Ansprüche, dessen elektrische Bauteile (32) eine Leistungselektronik bilden.

9. Verfahren zum Betreiben eines Geräts (4, 6, 8, 10, 12, 14) eines Kraftfahrzeugs (2), wobei das Gerät (4, 6, 8, 10, 12, 14) ein Gehäuse (20, 22, 24, 26, 28, 30) aufweist, in dem elektrische Bauteile (32, 34) angeordnet sind, die über mindestens eine elektrische Versorgungsleitung (36, 38, 40, 42), die innerhalb des Gehäuses (20, 22, 24, 26, 28, 30) angeordnet ist, mit elektrischer Energie versorgt werden, wobei das Gehäuse (20, 22, 24, 26, 28, 30) mindestens einen Aufprallschalter (44) aufweist, wobei für den Fall, dass auf den mindestens einen Aufprallschalter (44) eine mechanisch Kraft wirkt, die einen Schwellwert überschreitet, das Gehäuse (20, 22, 24, 26, 28, 30) an einer Position des mindestens einen Aufprallschalters (44) verformt wird, wobei die mindestens eine elektrische Versorgungsleitung (36, 38, 40, 42) innerhalb des Gehäuses (20, 22, 24, 26, 28, 30) aufgrund einer Verformung des Gehäuses (20, 22, 24, 26, 28, 30) an der Position des mindestens einen Aufprallschalters (44) und einer daraus resultierenden Kraft durchtrennt wird.

## Claims

1. Device for a motor vehicle (2) which includes a housing (20, 22, 24, 26, 28, 30) in which electrical components (32, 34) are disposed, which are to be supplied with electrical energy via at least one electrical supply line (36, 38, 40, 42), which is disposed within the housing (20, 22, 24, 26, 28, 30), wherein the housing (20, 22, 24, 26, 28, 30) includes at least one impact switch (44), wherein in the case that a mechanical force which overshoots a threshold value acts on the at least one impact switch (44), the housing (20, 22, 24, 26, 28, 30) is to be deformed at a position of the at least one impact switch (44), **characterised in that**
the at least one electrical supply line (36, 38, 40, 42) within the housing (20, 22, 24, 26, 28, 30) is severed by reason of a deformation of the housing (20, 22, 24, 26, 28, 30) at the position of the at least one impact switch (44) and a force resulting therefrom.

2. Device according to claim 1, in which the at least one impact switch (44) of the housing (20, 22, 24, 26, 28, 30) is formed as a predetermined breaking point.

3. Device according to claim 1 or 2, in which the at least one supply line (36, 38, 40, 42) includes at least one predetermined breaking point (49, 51), which is to be severed by reason of the deformation of the housing (20, 22, 24, 26, 28, 30) at the position of the at least one impact switch (44) and the force resulting therefrom.

4. Device according to any of the preceding claims, in which the at least one supply line (36, 38, 40, 42) is disposed at an internal wall of the housing (20, 22, 24, 26, 28, 30) and is connected with the at least one impact switch (44).

5. Device according to any of the preceding claims, in the housing (20, 22, 24, 26, 28, 30) of which is disposed at least one component (32, 34) which connects the position of the housing (20, 22, 24, 26, 28, 30), at which the at least one impact switch (44) is disposed, and the at least one electrical supply line (36, 38, 40, 42), wherein the at least one component (32, 34) is configured to transmit the force resulting from the deformation of the housing (20, 22, 24, 26, 28, 30) at the position of the at least one impact switch (44) to the at least one supply line (36, 38, 40, 42).

6. Device according to any of the preceding claims, the housing (20, 22, 24, 26, 28, 30) of which is to be deformed by reason of the acting force and remains closed.

7. Device according to any of the preceding claims, in the housing (20, 22, 24, 26, 28, 30) of which are disposed electrical and/or mechanical components (34) of an electrical machine (16, 18) for driving the motor vehicle (2).

8. Device according to any of the preceding claims, the electrical components (32) of which form a power electronic unit.

9. Method for operating a device (4, 6, 8, 10, 12, 14) of a motor vehicle (2), wherein the device (4, 6, 8, 10, 12, 14) includes a housing (20, 22, 24, 26, 28, 30) in which are disposed electrical components (32, 34) which are supplied with electrical energy via at least one electrical supply line (36, 38, 40, 42), which is disposed within the housing (20, 22, 24, 26, 28, 30), wherein the housing (20, 22, 24, 26, 28, 30) includes at least one impact switch (44), wherein in the case that a mechanical force which overshoots a threshold value acts upon the at least one impact switch (44), the housing (20, 22, 24, 26, 28, 30) is deformed at a position of the at least one impact switch (44), wherein the at least one electrical supply line (36, 38, 40, 42) within the housing (20, 22, 24, 26, 28, 30) is severed by reason of a deformation of the housing (20, 22, 24, 26, 28, 30) at the position of the at least one impact switch (44) and a force resulting therefrom.

## Revendications

1. Appareil pour un véhicule automobile (2), lequel appareil comporte un boîtier (20, 22, 24, 26, 28, 30) dans lequel sont agencés des composants électriques (32, 34) qui doivent être alimentés en énergie électrique par l'intermédiaire d'au moins une ligne d'alimentation électrique (36, 38, 40, 42) qui est agencée à l'intérieur du boîtier (20, 22, 24, 26, 28, 30), dans lequel le boîtier (20, 22, 24, 26, 28, 30) comporte au moins un contacteur d'impact (44) et dans lequel, dans le cas dans lequel une force mécanique qui dépasse une valeur de seuil agit sur l'au moins un contacteur d'impact (44), le boîtier (20, 22, 24, 26, 28, 30) doit être déformé au niveau d'une position de l'au moins un contacteur d'impact (44),
**caractérisé en ce que** l'au moins une ligne d'alimentation électrique (36, 38, 40, 42) à l'intérieur du boîtier (20, 22, 24, 26, 28, 30) est coupée en raison d'une déformation du boîtier (20, 22, 24, 26, 28, 30) au niveau de la position de l'au moins un contacteur d'impact (44) et d'une force résultant de ce fait.

2. Appareil selon la revendication 1, dans lequel l'au moins un contacteur d'impact (44) du boîtier (20, 22, 24, 26, 28, 30) est réalisé sous forme de point destiné à la rupture.

3. Appareil selon la revendication 1 ou 2, dans lequel l'au moins une ligne d'alimentation (36, 38, 40, 42) comporte au moins un point destiné à la rupture (49, 51) qui doit être coupé en raison de la déformation du boîtier (20, 22, 24, 26, 28, 30) au niveau de la position de l'au moins un contacteur d'impact (44) et d'une force résultant de ce fait.

4. Appareil selon l'une quelconque des revendications précédentes, dans lequel l'au moins une ligne d'alimentation (36, 38, 40, 42) est agencée au niveau d'une paroi intérieure du boîtier (20, 22, 24, 26, 28, 30) et est reliée à l'au moins un contacteur d'impact (44).

5. Appareil selon l'une quelconque des revendications précédentes dans le boîtier (20, 22, 24, 26, 28, 30) duquel est agencé au moins un composant (32, 34) qui relie la position du boîtier (20, 22, 24, 26, 28, 30), au niveau de laquelle est agencé l'au moins un contacteur d'impact (44), et l'au moins une ligne d'alimentation électrique (36, 38, 40, 42), l'au moins un composant (32, 34) étant conçu pour transmettre la force résultant de la déformation du boîtier (20, 22, 24, 26, 28, 30) au niveau de la position de l'au moins un contacteur d'impact (44) à l'au moins une ligne d'alimentation électrique (36, 38, 40, 42).

6. Appareil selon l'une quelconque des revendications précédentes dont le boîtier (20, 22, 24, 26, 28, 30) doit être déformé en raison de la force agissante et reste fermé.

7. Appareil selon l'une quelconque des revendications précédentes dans le boîtier (20, 22, 24, 26, 28, 30) duquel sont agencés des composants électriques et/ou mécaniques (34) d'un moteur électrique (16, 18) destinée à propulser le véhicule automobile (2).

8. Appareil selon l'une quelconque des revendications précédentes dont les composants électriques (32) constituent une électronique de puissance.

9. Procédé de fonctionnement d'un appareil (4, 6, 8, 10, 12, 14) d'un véhicule automobile (2), dans lequel l'appareil (4, 6, 8, 10, 12, 14) comporte un boîtier (20, 22, 24, 26, 28, 30) dans lequel sont agencés des composants électriques (32, 34) qui sont alimentés en énergie électrique par l'intermédiaire d'au moins une ligne d'alimentation électrique (36, 38, 40, 42) qui est agencée à l'intérieur du boîtier (20, 22, 24, 26, 28, 30), dans lequel le boîtier (20, 22, 24, 26, 28, 30) comporte au moins un contacteur d'impact (44) et dans lequel, dans le cas dans lequel une force mécanique qui dépasse une valeur de seuil agit sur l'au moins un contacteur d'impact (44), le boîtier (20, 22, 24, 26, 28, 30) doit être déformé au niveau d'une position de l'au moins un contacteur d'impact (44), dans lequel l'au moins une ligne d'alimentation électrique (36, 38, 40, 42) à l'intérieur du boîtier (20, 22, 24, 26, 28, 30) est coupée en raison d'une déformation du boîtier (20, 22, 24, 26, 28, 30) au niveau de la position de l'au moins un contacteur d'impact (44) et d'une force résultant de ce fait.
